# EUROPÄISCHE PATENTSCHRIFT

(11) **EP 0 405 394 B1**
(45) Veröffentlichungstag und Bekanntmachung des Hinweises auf die Patenterteilung: **01.05.1996**
(21) Anmeldenummer: 90112030.3
(22) Anmeldetag: 25.06.1990
(51) Int. Cl.: H04M 1/65

(54) **Teilnehmereinrichtung zur Übermittlung zwischengespeicherter Nachrichten zu einem Funkrufempfänger mit optischer und/oder akustischer Ausgabeeinrichtung**
Subscriber equipment for transmitting temporarily stored data to a paging receiver fitted with an acoustical and/or optical output device
Equipement d'abonné pour transmettre des données temporairement mémorisées à un récepteur d'appel radio muni d'un dispositif de sortie acoustique et/ou optique

(30) Priorität: 27.06.1989 DE 3920982
(43) Veröffentlichungstag der Anmeldung: 02.01.1991
(73) Patentinhaber: GRUNDIG E.M.V. Elektro-Mechanische Versuchsanstalt Max Grundig GmbH & Co. KG, D-90762 Fürth (DE)
(72) Erfinder: Terkowski, Jürgen, c/o Grundig E.M.V., D-8510 Fürth (DE)

(56) Entgegenhaltungen:
- EP-A- 0 041 195
- EP-A- 0 330 856
- GB-A- 2 173 071
- US-A- 4 072 824
- US-A- 4 600 809
- US-A- 4 961 216

## Beschreibung

### BESCHREIBUNG

Die Erfindung betrifft eine Teilnehmereinrichtung nach dem Oberbegriff des Patentanspruchs 1.

Es ist bekannt, ankommende Anrufe bei einem personell nicht besetzten Teilnehmeranschluß durch einen automatisch arbeitenden Anrufbeantworter (private Zusatzeinrichtung) entgegennehmen zu lassen. Zur Durchführung dieses Vorgangs muß lediglich eine Schalteinrichtung betätigt werden, die eine Umschaltung der Hauptanschlußleitung vom Fernsprechapparat auf den automatischen Anrufbeantworter bzw. Auskunftgeber vornimmt.

Weiterhin sind auch private Zusatzeinrichtungen bekannt, bei denen automatische Anrufbeantworter oder Auskunftgeber mit automatischen Wählhilfen und Wahlwiederholer (Wählautomaten) kombiniert sind, wie dies beispielsweise in der DE-OS 36 08 238 bzw. der inhaltsgleichen DE-OS 36 08 239 beschrieben ist. Die Leistungsmerkmale des daraus bekannten Telefoncomputers sind u.a.: "Nachrichtenaufzeichnung, Fernabfrage und Rufweiterleitung". Rufweiterleitung bedeutet im Zusammenhang mit privaten Zusatzeinrichtungen stets (vgl. beispielsweise Zeitschrift: "Orgadata", 1/84, Seiten 20-21; Zeitschrift: "net Nachrichten Elektronik + Telematik" 38 (1984), Heft 3, Seiten 110-114; Zeitschrift: "Funkschau" 20/1986, Seiten 36-40; Zeitschrift: "DM", 4/89, Seiten 90-94 und DE-OS 36 08 238) folgende Verfahrensabfolge:

Mit dem Anrufbeantworter wird die Nachricht des Anrufers aufgezeichnet, danach wird der Wählautomat aktiviert und der Besitzer des Anrufbeantworters wird automatisch über den europäischen Funkrufdienst oder über das Fernmeldenetz gerufen. Hierzu leitet der Wählautomat einen Verbindungsaufbau anhand einer oder mehrerer vorher gespeicherter Rufnummern ein und beim Melden des angerufenen Teilnehmers wird dieser gebeten (Ansagetext), den Besitzer des Anrufbeantworters an den Apparat zu holen. Die vom Anrufbeantworter aufgezeichnete Nachricht des Anrufers kann dann vom Besitzer des Anrufbeantworters über das Fernmeldenetz mit dem mitgeführten Codesender ferngesteuert abgefragt werden. Die Gesprächsgebühren gehen dabei nicht zu Lasten des Angerufenen, sondern zu Lasten des Besitzers des Anrufbeantworters.

Mit einer solchen Verfahrensabfolge kann zwar weitgehend sichergestellt werden, daß der gerufene, aber abwesende Teilnehmer schnell auf einen Anruf reagieren kann. Um eine Fernabfrage der aufgezeichneten Nachricht durchführen zu können, muß er in der Regel einen Codesender mit sich führen. Die Fernabfrage kann auch durch den Besitzer des Anrufbeantworters mit Sprechen eines Codes aktiviert werden. Dieses Verfahren hat sich jedoch in der Praxis als sehr unzuverlässig erwiesen.

Beim europäischen Funkrufdienst ist der Funkrufempfänger über maximal vier Rufnummern erreichbar. In der Funkrufzentrale werden Codesignale gebildet, die den mit der Funkrufzentrale verbundenen UKW-Sendern zur Rufaussendung zugeführt werden. Die ausgesendeten Codesignale werden vom Funkrufempfänger empfangen und decodiert. Bei Übereinstimmung zwischen den im Decoder eingestellten Code mit dem empfangenen Code werden ein akustisches und ein optisches Signal aufgelöst. Die Bedeutung der Codesignale muß zwischen dem Funkrufteilnehmer und dem anrufenden Teilnehmer abgesprochen sein.

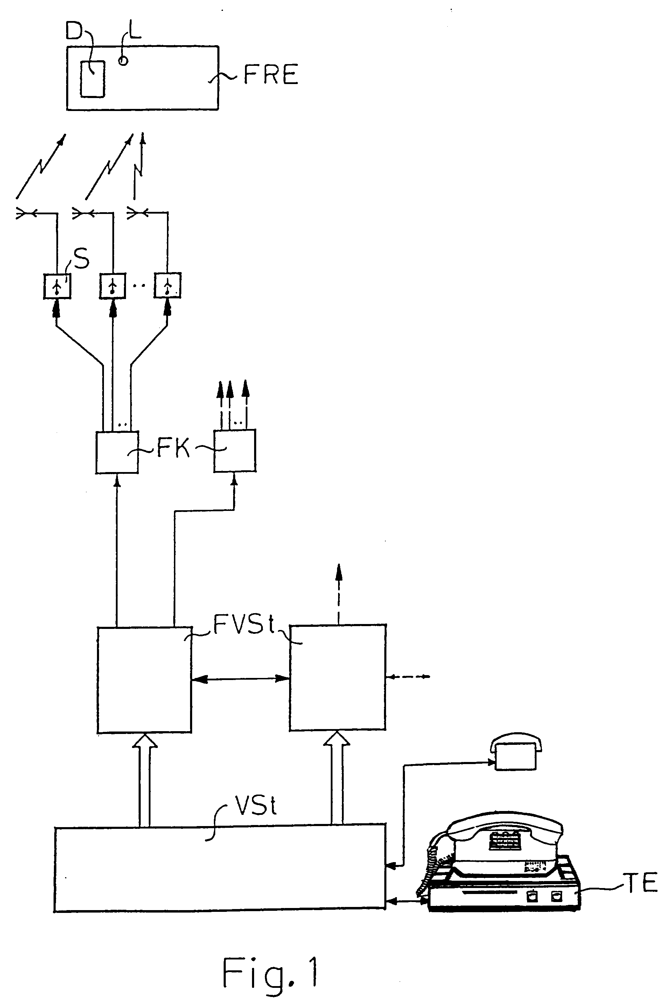

Weiterhin ist ein als City-Ruf bezeichneter und in Fig. 1 dargestellter Funkrufdienst bekannt, bei dem kurze Informationen als Ziffern oder Texte auf dem Display D des Funkrufempfängers FRE dargestellt werden. Diese Nachrichten können über den Fernsprechapparat, Telex-, Teletex- oder Btx-Endgeräte eingegeben werden. Die Informationsübermittlung ist beim City-Ruf in drei Rufklassen möglich: Nur-Ton für Ton-Funkrufempfänger FRE, die entsprechend wie beim europäischen Funkrufdienst vier verabredete Signale empfangen können; Numeric für Numeric-Funkrufempfänger FRE zum Empfang von bis zu fünfzehn Ziffern oder Sonderzeichen und Alphanumeric für Alphanumeric-Funkrufempfänger FRE zum Empfangen von Text (Ziffern- und Buchstabenfolgen) bis zu achzig Zeichen.

City-Ruf wird in regionalen Zonen (sog. Rufzonen) ausgestrahlt, wobei das Versorgungsgebiet in etwa den gesamten Einzugsbereich einer großen Stadt abdeckt.

Das Funkrufnetz besteht aus den Funkrufvermittlungsstellen FVSt, den Funkrufkonzentratoren FK, den Sendern S und den Funkrufempfängern FRE. Die Funkrufvermittlungsstelle FVSt verwaltet die Teilnehmerdaten und steuert die Sender S, über welche ein Ruf ausgestrahlt werden soll. Der Zugang von den öffentlichen Telekommunikationsnetzen zum Funkrufnetz ist unter gleicher Zugangskennzahl möglich und hängt nur von der Rufklasse und dem jeweiligen Eingabegerät für die City-Ruf-Informationen ab. Als Eingabegeräte dienen die beim Teilnehmer installierten Endgeräte für die verschiedenen Postdienste. Für eine Ziffern- und Texteingabe von einem einfachen Telefonanschluß aus sind besondere Zusatzgeräte, z.B akustisch ankoppelbare MFV-Geber, erforderlich, da Numeric-Funkrufempfänger FRE das Mehrfrequenz-Wählverfahren (MFV) erfordern. Soll von einem Personal-Computer oder Home-Computer eine alphanumerische Information eingegeben werden, so ist dieser mit einem Akustikkoppler oder Modem zu verbinden.

Weiterhin ist aus Zeitschrift: "net", 37 (1983), Heft 2, Seiten 48 bis 53, eine Personenruf-Funkanlage für landesweite Rufnetze bekannt, bei der außer Sprachdurchsagen auch bis 10-stellige Ziffern übertragen werden können. Hierzu ist in der Funkrufzentrale unter anderem eine sog. Anpassungsübertragung vorgesehen, welche die bis zu achtzehn Ziffern umfassende Wählinformation des rufenden Teilnehmers speichert und auch den Dialog des rufenden Teilnehmers mit dem Rufprozessor ermöglicht. Weiterhin ist eine Ankopplung der Anpassungsübertragung an eine Sprachsammelschiene für eine zeitlich begrenzte Sprachmitteilung an den Funkrufempfänger vorgesehen, wobei für kurze Zeit ein Sprechweg vom Mikrophon des Anrufers zum Lautsprecher des Funkrufempfängers durchgeschaltet wird. Für Spezialanwendungen - z.B. Feuerwehr - können Rufe auch durch Kontakte ausgelöst werden.

Durch Anrufbeantworter und/oder Funkrufempfänger kann die Erreichbarkeit eines gerufenen, aber abwesenden Teilnehmers verbessert werden. Bedingt durch die Konzeption der Anrufbeantworter und der Funkrufdienste ist eine schnelle Nachrichtenübermittlung von in der Teilnehmereinrichtung, insbesondere Anrufbeantworter, zwischengespeicherten Nachrichten nicht möglich.

Weiterhin ist es aus der EP-A-0 041 195 oder der GB-A-2 173 071 bekannt, wie mittels einer in der Teilnehmereinrichtung angeordneten Steuereinrichtung (Mikroprozessor) automatisch die zwischengespeicherte Fernsprechteilnehmerrufnummer des anrufenden Teilnehmers zu einem Funkrufempfänger, insbesondere Pager übermittelt wird. Zusätzlich wird beim Gegenstand der EP-A-0 041 195 ein Weg aufgezeigt, wie dem von einem herkömmlichen Fernsprechapparat anrufenden Teilnehmer eine akustische Kontrolle der zwischengespeicherten Fernsprechteilnehmerrufnummer ermöglicht wird.

Der Erfindung liegt die Aufgabe zugrunde, eine Teilnehmereinrichtung derart auszugestalten, daß eine rasche Übermittlung zwischengespeicherter Nachrichten zu einem Funkrufempfänger mit optischer und/oder akustischer Ausgabeeinrichtung ermöglicht wird.

Diese Aufgabe wird bei einer gattungsgemäßen Teilnehmereinrichtung durch die kennzeichnenden Merkmale des Patentanspruchs 1 gelöst.

Die erfindungsgemäße Teilnehmereinrichtung weist den Vorteil auf, daß der anrufende Teilnehmer numerische, alphanumerische und gesprochene Nachrichten hinterlassen kann, welche im Zwischenspeicher der Teilnehmereinrichtung zwischengespeichert und nach dem Auslösen der Verbindung automatisch zu einem Funkrufempfänger mit optischer und/oder akustischer Ausgabeeinrichtung übermittelt werden. Weiterhin ist von Vorteil, daß der rufende Teilnehmer auch dann eine Nachricht zu einem Funkrufempfänger übermitteln kann, wenn er nicht die Funkrufleilnehmernummer kennt. Ist die Teilnehmereinrichtung in Form eines Anrufbeantworters mit Nachrichtenaufzeichnung ausgestaltet, so ist es für den anrufenden Teilnehmer nicht erforderlich, im Hinblick auf eine rasche Übermittlung seiner Nachricht, den Besitzer des Anrufbeantworters, welcher unterwegs ist, über den Funkrufdienst zu erreichen. Da der anrufende Teilnehmer seine Nachricht hinterlassen kann, fallen somit keine sonst erforderlichen zweimaligen Gebühren an, sondern die zweite Gesprächsgebühr geht zu Lasten des Besitzers des Anrufbeantworters.

Durch die neue Zusatzfunktion der Teilnehmereinrichtung, insbesondere des Anrufbeantworters, erübrigt sich ein Anruf des Besitzers des Anrufbeantworters von unterwegs aus. Für den Besitzer des Anrufbeantworters entfällt somit die sonst erforderliche Gesprächsgebühr für die ferngesteuerte Abfrage einer vom Anrufbeantworter aufgezeichneten Nachricht des Anrufers. Je nach Ausstattung des Funkrufempfängers kann auf dem Display des Funkrufempfängers die zwischengespeicherte kurze Information als Ziffern oder Texte dargestellt werden. Weist der Funkruf empfänger auch eine akustische Ausgabeeinrichtung auf, so können neben dieser Darstellung von kurzen Informationen auf dem Display auch Sprachdurchsagen übermittelt werden. Da moderne Anrufbeantworter in der Regel MFV-fähig sind und Einrichtungen zur Rufweiterleitung über den europäischen Funkrufdienst aufweisen, ist als zusätzlicher Geräteaufwand lediglich der zusätzliche Zwischenspeicher erforderlich.

Die Ausführungsform der Teilnehmereinrichtung gemäß Patentanspruch 2 weist den Vorteil auf, daß moderne Komfortfernsprechapparate mit einer MFV-fähige Tastatur zur Eingabe der zum Funkrufempfänger zu übermittelnden Nachricht benutzt werden können.

Die Ausführungsform der Teilnehmereinrichtung gemäß Patentanspruch 3 weist den Vorteil auf, daß keine Zusatzeinrichtung zür Eingabe der Zeichen, d.h. Ziffern oder Buchstaben, erforderlich ist. Um eine zusätzliche numerische Information ohne Zusatz-Eingabegeräte auf der Teilnehmerseite über das Fernsprechnetz zur Funkrufzentrale zu übertragen, ist aus der DE-OS 35 19 972 eine Funkrufanordnung bekannt, bei der in der Funkrufzentrale eine Anordnung zur Spracherkennung angeordnet ist. Diese in der Funkruf zentrale angeordnete Anordnung zur Spracherkennung führt eine Signalumformung der vom Fernsprechteilnehmer gesprochenen numerischen Information in zur Aussendung über die Funkrufsender geeignete Signale durch.

Bei der Ausführungsform gemäß Patentanspruch 5 erfolgt eine akustische Bestätigung der eingegebenen bzw. erkannten, gesprochenen Zeichen. Durch die akustische Kontrolle wird es dem anrufenden Teilnehmer ermöglicht sicherzustellen, daß beispielsweise die richtige Fernsprechteilnehmerrufnummer zum Funkrufempfänger übertragen wird. Ist die Teilnehmereinrichtung sprachgesteuert und enthält diese Einrichtungen zur digitalen Sprachverarbeitung, so ist der hierfür vorzusehende zusätzliche Geräteaufwand sehr gering.

Die Ausführungsform der Teilnehmereinrichtung gemäß Patentanspruch 7 ermöglicht sowohl eine Fernüberwachung der Teilnehmereinrichtung selbst, als auch eine Fernüberwachung von mit der Teilnehmereinrichtung in Verbindung stehender Geräte. Für den Fall, daß der Funkrufempfänger auch eine akustische Ausgabeeinrichtung aufweist, kann auch eine akustische Raumüberwachung zur Ergänzung der Funktion von Alarmanlagen vorgenommen werden.

Die Erfindung wird im folgenden anhand in der Zeichnung dargestellter Ausführungsformen näher beschrieben und erläutert.

Es zeigt:
- Fig. 1: die Netzstruktur eines Funkrufdienstes,
- Fig. 2: eine erste Ausführungsform und
- Fig. 3: eine zweite Ausführungsform der erfindungsgemäßen Teilnehmereinrichtung.

Fig. 1 zeigt die Struktur des Funkrufdienstes City-Ruf in der Bundesrepublik. Der City-Ruf kann von den Teilnehmern auch grenzüberschreitend genutzt werden, beispielsweise kann der Funkrufdienst Alphapage in Frankreich, Teledrine in Italien sowie Europage in Großbritannien genutzt werden. Hierzu muß sich der City-Ruf-Teilnehmer in eine internationale europäische Rufzone einbuchen. Durch die Signalumsetzung in der erfindungsgemäßen Teilnehmereinrichtung TE ist für den anrufenden Teilnehmer es nicht erforderlich, seine Nachricht mit einem speziellen Eingabegerät für Funkrufinformationen einzugeben.

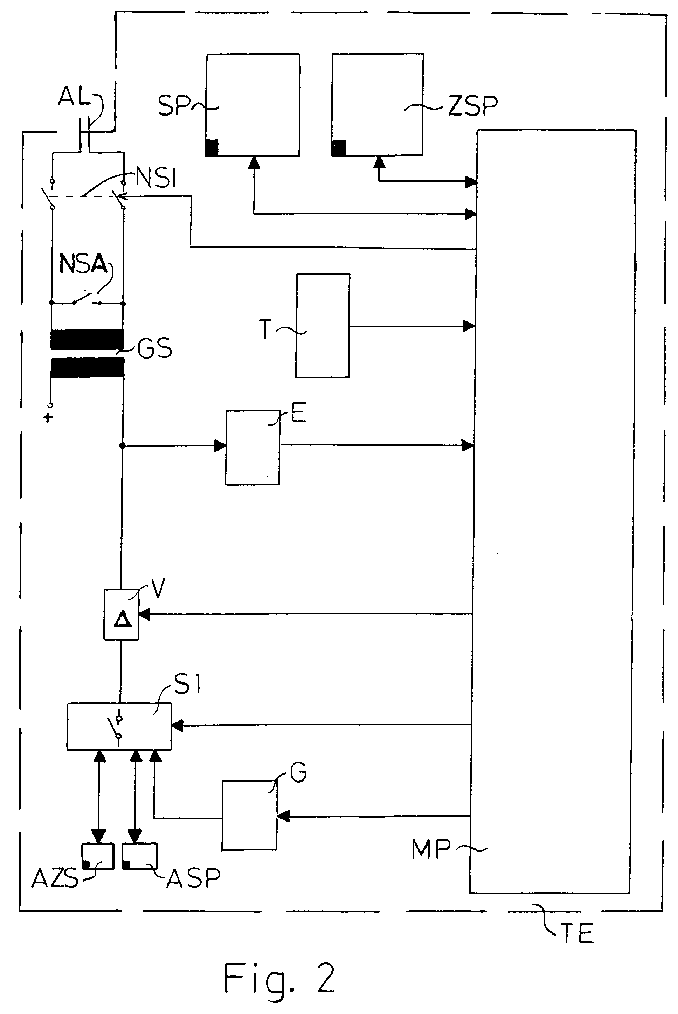

Die in Fig. 2 dargestellte Teilnehmereinrichtung TE steht über die Hauptanschlußleitung AL mit dem Fernmeldenetz in Verbindung. In der Teilnehmereinrichtung TE ist ein Mikroprozessor MP angeordnet, welcher mit einem Nummernschalter-Impulskontakt NSI, einem NSA-Kontakt NSA sowie einem Umschalter S1 verbunden ist. Mit dem Nummernschalter-Impulskontakt NSI werden Impulsserien erzeugt, der NSA-Kontakt dient zur Abschaltung der Sprechschaltung während der Wahl und mit dem Umschalter S1 erfolgt eine Umschaltung auf verschiedene Nachrichtenquellen.

Weiterhin ist der Mikroprozessor MP mit einem Speicher SP mit Wählinformationen (z.B. Rufnummern) verbunden. Der Mikroprozessor MP übernimmt die Funktion eines Wählautomaten und kann auch eine Vermittlungsfunktion ausführen. Hierbei steuert der Mikroprozessor MP den Austausch vermittlungstechnischer Informationen zwischen der Teilnehmereinrichtung TE und den Steuereinrichtungen der Vermittlungsstellen VSt bzw. FVSt des Fernmeldenetzes. Die Erzeugung der Wählinformation erfolgt in der Teilnehmereinrichtung TE entweder mit dem Nummernschalter-Impulskontakt NSI oder mit einem nach dem Mehrfrequenz-Codewahl-Verfahren arbeitenden Generator G.

Bei der in der Fig. 2 dargestellten Ausführungsform wird von der Anwendung bei privaten Zusatzeinrichtungen, insbesondere bei einem Anrufbeantworter, ausgegangen. Die erfindungsgemäße Teilnehmereinrichtung TE kann jedoch in allen Nachrichtennetzen für vermittelte Verbindungen eingesetzt werden, beispielsweise kann auch der Anrufbeantworter integraler Bestandteil eines schnurlosen Telefonapparats sein, wie dies aus der Zeitschrift "JEI, June 89, S. 98 ff" bekannt ist.

Die Funktionsweise der erfindungsgemäßen Teilnehmereinrichtung TE wird im folgenden näher beschreiben und erläutert.

Kommt über die Hauptanschlußleitung AL in der Teilnehmereinrichtung TE ein Rufsignal an, so wird dieses von einem Rufempfangskreis erkannt und ein Steuersignal für den Mikroprozessor MP ausgelöst, welcher die Verbindung zu anrufenden Teilnehmer herstellt. Gesteuert durch den Mikroprozessor MP wird der im Ansagespeicher ASP enthaltene Ansagetext ausgelesen und zum anrufenden Teilnehmer über die Hauptanschlußleitung AL übermittelt. Der anruf ende Teilnehmer kann entweder eine gesprochene Nachricht hinterlassen, welche im Aufzeichnungsspeicher AZS zur Fernabfrage zwischengespeichert wird oder er gibt mit einem Fernsprechapparat, welcher Signale nach dem Mehrfrequenz-Codewahl-Verfahren erzeugen kann oder mit einem akustisch angekoppelten Eingabegerät (Code-Sender zur Erzeugung von MFV- Zeichen) numerische Nachrichten für den Funkrufempfänger FRE ein. Diese numerische Nachricht kann z.B. die Fernsprechteilnehmerrufnummer des Fernsprechteilnehmers sein. Im Zwischenspeicher ZSP werden die Ziffern zwischengespeichert und der anrufende Teilnehmer erhält die Schlußansage. Nach dem Auslösen der Verbindung leitet der Mikroprozessor MP anhand der im Speicher SP gespeicherten Wählinformation einen Verbindungsaufbau zum Funkrufempfänger FRE ein. Ist die Verbindung hergestellt, so wird die im Zwischenspeicher ZSP befindliche Information, d.h. im geschilderten Fall die Ziffernfolge, ausgelesen und an der optischen Ausgabeeinrichtung D des Funkrufempfängers FRE angezeigt.

Weiterhin besteht die Möglichkeit, daß vom Besitzer der Teilnehmereinrichtung TE mit einer Tastatur T eingegebene Zeichen dem Zwischenspeicher ZSP zugeführt werden. Wird beispielsweise eine Fernüberwachung von an die Teilnehmereinrichtung TE angeschlossenen Geräten vorgenommen, so liest der Mikroprozessor MP, z.B. bei Betätigung eines Alarmkontakts, die entsprechend eingegebene und im Zwischenspeicher ZSP enthaltene Nachricht zur Übermittlung zum Funkrufempfänger FRE aus.

Bei der in Fig. 2 dargestellten Ausführungsform enthält die Teilnehmereinrichtung TE eine Gabelschaltung GS mit Übertrager, ebenso können jedoch auch elektronische Gabelschaltungen mit automatischer Leitungsimpedanz-Anpassung und/oder einer leitungslängenabhängigen Verstärkungsregelung eingesetzt werden. Weiterhin ist mit dem Mikroprozessor Mp ein umschaltbarer Verstärker V verbunden, wodurch während jeder Phase der Nachrichtenübertragung, z.B. eine gute Sprachqualität, sichergestellt ist. Weiterhin ist in der Teilnehmereinrichtung TE ein Empfänger E für Signale nach dem DTMF-Verfahren (Doppelton-Mehrfrequenz-Verfahren) angeordnet, welcher mit dem Mikroprozessor MP verbunden ist. Moderne Anrufbeantworter enthalten in der Regel ohnehin den Empfänger E und den Generator G. Dabei dient der Empfänger E zur Decodierung der für die Fernabfrage erforderlichen Codeworte. Mit dem Generator G werden die Wählsignale erzeugt. Bei der erfindungsgemäßen Teilnehmereinrichtung TE dienen der Empfänger E und der Generator G zusätzlich zur Signalumsetzung bei der Zwischenspeicherung und Übermittlung der Nachrichten.

Die in der Fig. 2 dargestellte Ausführungsform betrifft die Übermittlung von Nachrichten in Form von Ziffern. Für den Fall, daß auch kurze Textinformationen übertragen werden sollen, ist eine entsprechende Signalumsetzung in der Teilnehmereinrichtung TE erforderlich, wobei als Eingabegerät hierfür beim anrufenden Teilnehmer entweder Telex-, Teletex- oder Btx-Endgeräte installiert sein müssen oder ein Computer mit Akustikkoppler oder Modem angeordnet ist.

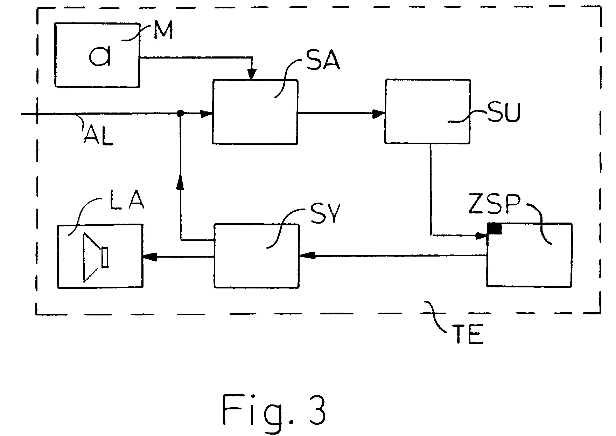

Bei der in Fig. 3 dargestellten zweiten Ausführungsform sind solche besonderen Eingabegeräte bei den Teilnehmern nicht erforderlich. Die über die Hauptanschlußleitung AL zugeführten Sprachsignale werden in der Teilnehmereinrichtung TE einem Sprachanalysator SA zugeführt. Mit dem Sprachanalysator SA und dem Zwischenspeicher ZSP ist eine Einrichtung SU zur Signalumformung des erkannten, gesprochenen Zeichens verbunden. Die Spracheingabe kann bei dieser Ausführungsform nicht nur vom anrufenden Teilnehmer, sondern auch vom Besitzer der Teilnehmereinrichtung TE über ein zum Fernsprechen vorgesehenes Mikrophon M vorgenommen werden.

Um die erkannten, gesprochenen, Zeichen akustisch zu bestätigen, ist in der Teilnehmereinrichtung TE eine Sprachsyntheseeinrichtung SY angeordnet. Bei einer in der Zeichnung nicht dargestellten Ausführungsform ist die Sprachsyntheseeinrichtung SY mit den Sprachanalysator SA verbunden. Zur akustischen Kontrolle für den Besitzer der Teilnehmereinrichtung TE kann als Sprachausgabeeinrichtung LA eine zum Fernsprechen vorgesehene Höreinrichtung LA an die Sprachsyntheseeinrichtung SY angeschaltet werden.

## Patentansprüche

1. Teilnehmereinrichtung (TE), insbesondere Anrufbeantworter, mit einem Mikroprozessor (MP), welcher die Gerätefunktionen der Teilnehmereinrichtung (TE) und/oder den Austausch vermittlungstechnischer Informationen zwischen der Teilnehmereinrichtung (TE) und den Steuereinrichtungen der Vermittlungsstellen (VSt, FVSt) des Fernmeldenetzes steuert und mit einem mit dem Mikroprozessor (MP) verbundenen Speicher (SP) für Wählinformationen, wobei der Mikroprozessor (MP) anhand der Wählinformation eine Verbindung zu einem Funkrufempfänger (FRE) mit einer optischen und/oder akustischen Ausgabeeinrichtung (L, D) aufbaut und danach eine vom anrufenden Teilnehmer eingegebene, zwischengespeicherte Fernsprechteilnehmerrufnummer ausliest,
**dadurch gekennzeichnet,** daß in der Teilnehmereinrichtung (TE) zusätzlich ein mit dem Mikroprozessor (MP) verbundener Zwischenspeicher (ZSP) angeordnet ist, welchem die von einem anrufenden Teilnehmer oder vom Besitzer der Teilnehmereinrichtung (TE) mit einer Tastatur (T) oder mit einer Spracheingabeeinrichtung (M) eingegebenen Nachrichten zugeführt werden, daß an die Teilnehmereinrichtung (TE) Geräte angeschlossen werden können, die dem Mikroprozessor (MP) Überwachungsinformationen zuführen und daß der Mikroprozessor dazu geeignet ist, (MP) diese auszuwerten und danach die im Zwischenspeicher (ZSP) enthaltene Nachricht und/oder Überwachungsinformation zur Fernanzeige an der optischen und/oder akustischen Ausgabeeinrichtung (L, D) des Funkrufempfängers (FRE) auszulesen.

2. Teilnehmereinrichtung nach Anspruch 1,
**dadurch gekennzeichnet,** daß in der Teilnehmereinrichtung (TE) ein mit der Spracheingabeeinrichtung (M) verbindbarer Sprachanalysator (SA) angeordnet ist und daß mit dem Sprachanalysator (SA) und dem Zwischenspeicher (ZSP) eine Einrichtung (SU) zur Signalumformung des erkannten, gesprochenen Zeichens verbunden ist.

3. Teilnehmereinrichtung nach Anspruch 2,
**dadurch gekennzeichnet,** daß als Spracheingabeeinrichtung (M) ein zum Fern sprechen vorgesehenes Mikrophon (M) durch den Mikroprozessor (MP) angeschaltet wird.

4. Teilnehmereinrichtung nach einem oder mehreren der Ansprüche 1 bis 3,
**dadurch gekennzeichnet,** daß zur akustischen Bestätigung der gesprochenen oder eingegebenen Zeichen in der Teilnehmereinrichtung (TE) eine Sprachsyntheseeinrichtung (SY) und eine mit dieser verbundene Sprachausgabeeinrichtung (LA) angeordnet sind.

5. Teilnehmereinrichtung nach Anspruch 4,
**dadurch gekennzeichnet,** daß als Sprachausgabeeinrichtung (LA) eine zum Fernsprechen vorgesehene Höreinrichtung (LA) durch den Mikroprozessor (MP) angeschaltet wird.

## Claims

1. Subscriber device (TE), in particular telephone answering machine, having a microprocessor (MP) which controls the appliance functions of the subscriber device (TE) and/or the exchange of switching information between the subscriber device (TE) and the control devices of the switching centres (VSt, FVSt) of the communication network and having a dialling information memory (SP) connected to the microprocessor (MP), the microprocessor (MP) setting up a connection to a radio-paging receiver (FRE) having a visual and/or audible output device (L, D) on the basis of the dialling information and then reading out a telephone subscriber call number entered by the calling subscriber and temporarily stored, characterized in that there is additionally fitted in the subscriber device (TE) a temporary store (ZSP) which is connected to the microprocessor (MP) and to which the messages entered by a calling subscriber or the owner of the subscriber device (TE) by means of a keyboard (T) or by means of a speech input device (M) are fed, in that there can be connected to the subscriber device (TE) appliances which feed monitoring information to the microprocessor (MP), and in that the microprocessor (MP) is suitable for evaluating the latter and then reading out the message and/or monitoring information contained in the temporary store (ZSP) for the purpose of teleindication at the visual and/or audible output device (L, D) of the radio-paging receiver (FRE).

2. Subscriber device according to Claim 1, characterized in that a speech analyser (SA) which can be connected to the speech input device (M) is fitted in the subscriber device (TE) and in that a device (SU) for the signal conversion of the recognized spoken character is connected to the speech analyser (SA) and the temporary memory (ZSP).

3. Subscriber device according to Claim 2, characterized in that, as speech input device (M), a microphone (M) provided for telephony is switched on by the microprocessor (MP).

4. Subscriber device according to one or more of Claims 1 to 3, characterized in that, for the audible acknowledgement of the spoken or entered character, a speech synthesis device (SY) and a speech output device (LA) connected to the latter are fitted in the subscriber device (TE).

5. Subscriber device according to Claim 4, characterized in that, as speech output device (LA), a listening device (LA) provided for telephony is switched on by the microprocessor (MP).

## Revendications

1. Équipement d'abonné (TE), notamment répondeur téléphonique, comportant un microprocesseur (MP), qui commande les fonctions de l'équipement d'abonné (TE) et/ou l'échange d'informations techniques de commutation entre l'équipement d'abonné (TE) et les dispositifs de commande des centraux (VSt, FVSt) du réseau de télécommunications, et comportant une mémoire (SP) pour des informations de sélection qui est reliée au microprocesseur (MP), et dans lequel le microprocesseur (MP) établit, sur la base de l'information de sélection, une liaison avec un récepteur d'appels radio (FRE) comportant un dispositif de sortie optique et/ou acoustique (L,D) et ensuite lit un numéro d'appel d'abonné téléphonique, mémorisé temporairement et introduit par l'abonné appelant,
caractérisé en ce que dans l'équipement téléphonique (TE) est disposée en supplément une mémoire intermédiaire (ZSP), qui est reliée au microprocesseur (MP) et à laquelle sont envoyées les informations, qui sont introduites par un abonné appelant ou par le possesseur de l'équipement téléphonique (TE) à l'aide d'un clavier (T) ou à l'aide d'un dispositif (M) d'introduction de signaux vocaux, qu'à l'équipement téléphonique (TE) peuvent être raccordés des appareils qui envoient des informations de contrôle au microprocesseur (MP), et que le microprocesseur (MP) est approprié pour exploiter ces informations et lire ensuite l'information, qui est contenue dans la mémoire intermédiaire (ZSP), et/ou l'information de contrôle pour l'affichage à distance dans le dispositif de sortie optique et/ou acoustique (L,D) du récepteur d'appels radio (FRE).

2. Équipement d'abonné selon la revendication 1, caractérisé en ce qu'un analyseur de signaux vocaux (SA), qui peut être relié au dispositif (M) d'entrée de signaux vocaux, est disposé dans l'équipement téléphonique (TE) et que le dispositif (SU) servant à réaliser la transformation du signal parlé identifié est relié à l'analyseur de signaux vocaux (SA) et à la mémoire intermédiaire (ZSP).

3. Équipement d'abonné selon la revendication 2, caractérisé en ce qu'un microphone (M) prévu pour la téléphonie, est branché, en tant que dispositif (M) d'introduction de signaux vocaux, au moyen du microprocesseur (MP).

4. Équipement d'abonné selon une ou plusieurs des revendications 1 à 3, caractérisé en ce que pour la confirmation acoustique du signal parlé ou introduit, un dispositif de synthèse de signaux vocaux (SY) et un dispositif de sortie de signaux vocaux (LA), relié au dispositif de synthèse de signaux vocaux, sont disposés dans l'équipement d'abonné (TE).

5. Équipement d'abonné selon la revendication 4, caractérisé en ce qu'un dispositif d'écoute (LA) prévu pour la téléphonie est branché en tant que dispositif de sortie de signaux vocaux (LA), au moyen du microprocesseur (MK).
